# FASCICULE DE BREVET EUROPEEN

(11) **EP 4 248 074 B1**
(45) Date de publication et mention de la délivrance du brevet: **03.09.2025**
(21) Numéro de dépôt: 21807082.9
(22) Date de dépôt: 08.11.2021
(51) Int. Cl.: F02C 7/36, F01D 5/02

(54) **ARBRE DE LIGNE D'ENTRAÎNEMENT DE TURBOMOTEUR D'AÉRONEF COMPRENANT UNE BAGUE DE LIAISON POUR LE DÉMONTAGE DE LA LIGNE D'ENTRAÎNEMENT**
ANTRIEBSWELLE EINES FLUGZEUGTURBINENTRIEBWERKS MIT EINEM VERBINDUNGSRING ZUM AUSBAU DER ANTRIEBSWELLE
AIRCRAFT TURBINE ENGINE DRIVE LINE SHAFT COMPRISING A CONNECTING RING FOR DISMANTLING THE DRIVE LINE

(30) Priorité: 17.11.2020 FR 2011801
(43) Date de publication de la demande: 27.09.2023
(73) Titulaire: SAFRAN AIRCRAFT ENGINES, 75015 Paris (FR)
(72) Inventeur: JACQUEMARD, Christophe Paul, 77550 MOISSY-CRAMAYEL (FR); AGNERAY, Xavier Jean Yves Alain, 77550 MOISSY-CRAMAYEL (FR)
(74) Mandataire: Argyma
(86) Numéro de dépôt international: PCT/EP2021/080918
(87) Numéro de publication internationale: WO 2022/106237

(56) Documents cités:
- FR-A1- 2 633 023
- US-A- 3 631 688
- US-A- 4 185 937

## Description

### Domaine technique

La présente invention concerne le domaine des turbomoteurs d'aéronef et vise plus particulièrement un arbre de ligne d'entraînement comprenant une bague de liaison pour faciliter le démontage de la ligne d'entraînement.

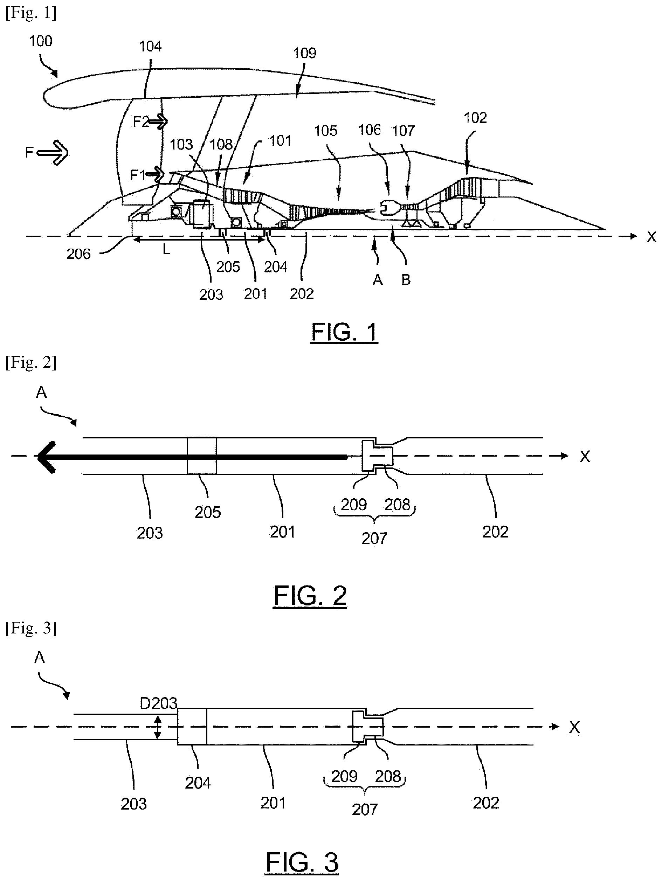

De manière connue, en référence à la [Fig.1], il est représenté un turboréacteur d'aéronef à double flux 100 s'étendant longitudinalement selon un axe X orienté d'amont en aval et configuré pour permettre la propulsion de l'aéronef à partir de l'accélération d'un flux d'air F circulant d'amont en aval dans le turboréacteur 100. Par la suite, les termes « amont » et « aval » sont définis par rapport à l'orientation de l'axe longitudinal X. Les termes « intérieur » et « extérieur » sont quant à eux définis selon la direction radiale par rapport à l'axe longitudinal X.

Comme illustré sur la [Fig.1], le turboréacteur d'aéronef à double flux 100 comprend une veine primaire 108 radialement intérieure et une veine secondaire 109 radialement extérieure dans lesquelles circulent respectivement une première partie et une deuxième partie du flux d'air F, dites flux d'air primaire F1 et flux d'air secondaire F2. Par ailleurs, le turboréacteur 100 comprend d'amont en aval une entrée d'air comprenant une soufflante 104 permettant l'accélération du flux d'air F, des compresseurs basse pression 101 et haute pression 105 permettant l'accélération du flux d'air primaire F1, une chambre de combustion 106 de gaz avec le flux d'air primaire F1 et des turbines haute pression 107 et basse pression 102. La turbine haute pression 107 permet l'entraînement en rotation du compresseur haute pression 105 tandis que la turbine basse pression 102 permet l'entraînement en rotation du compresseur basse pression 101 et de la soufflante 104. Dans cet exemple, le turboréacteur 100 comprend en outre un réducteur 103 relié à la soufflante 104 et configuré pour réduire la vitesse de rotation transmise par la turbine basse pression 102 à la soufflante 104.

Plus précisément, toujours en référence à la [Fig.1], le turboréacteur 100 comprend une ligne d'entraînement basse pression A reliant le réducteur 103, le compresseur basse pression 101 et la turbine basse pression 102 ainsi qu'une ligne d'entraînement haute pression B reliant le compresseur haute pression 105 et la turbine haute pression 107. Les lignes d'entraînement basse pression A et haute pression B s'étendent de manière coaxiale selon l'axe longitudinal X, la ligne d'entraînement basse pression A s'étendant de manière radialement intérieure à la ligne d'entraînement haute pression B.

Toujours en référence à la [Fig.1], la ligne d'entraînement basse pression A comprend d'amont en aval un arbre de réducteur 203, un arbre de compresseur 201 et un arbre de turbine 202, se présentant sous la forme de pièces creuses coaxiales d'axe longitudinal X et sur lesquels sont montés respectivement le réducteur 103, le compresseur basse pression 101 et la turbine basse pression 102. La ligne d'entraînement basse pression A comprend également des bagues de liaison 204, 205 permettant d'assembler bout à bout les arbres 203, 201, 202 ainsi que des bagues anti-rotation et des segments d'arrêt axiaux (non représentés) pour sécuriser l'assemblage.

En pratique, des opérations de maintenance doivent être régulièrement pratiquées sur le turboréacteur 100, et notamment sur la turbine basse pression 102, qui nécessitent de désassembler l'arbre de turbine 202 de la ligne d'entraînement basse pression A, c'est-à-dire de désassembler la bague de liaison 204 reliant l'arbre de compresseur 201 et l'arbre de turbine 202. Une telle bague de liaison 204 n'est cependant pas accessible directement depuis l'extérieur, étant donné qu'elle est située à une distance L de plus d'un mètre en aval de l'extrémité amont 206 de la ligne d'entrainement basse pression A. Une telle opération de maintenance nécessite ainsi un démontage puis un remontage complets de la ligne d'entraînement basse pression A, ce qui est chronophage.

Pour résoudre cet inconvénient, comme illustré sur la [Fig.2], il est connu par la demande de brevet FR3018313A1 une bague de liaison 207 qui est insérée par l'extrémité amont 206 de la ligne d'entraînement basse pression A dans l'arbre de réducteur 203 et l'arbre de compresseur 201. Une telle bague de liaison 207 comprend une extrémité aval 208 configurée pour être vissée avec l'arbre de turbine 202 et une extrémité amont 209 configurée pour venir en butée axiale contre l'extrémité de l'arbre de compresseur 201. De manière avantageuse, lors d'une opération de maintenance, une telle bague de liaison 207 peut être avantageusement dévissée et retirée depuis l'extrémité amont 206 de la ligne d'entraînement basse pression A, puis réinsérée et revissée de manière analogue. Il n'est ainsi plus nécessaire de démonter puis de remonter la ligne d'entraînement basse pression A dans son ensemble.

Il est également connu par la demande de brevet US4185937A1 un dispositif de fixation comprenant une portion de tête montée en butée dans un arbre avant, une portion filetée coopérant avec un arbre arrière, et un anneau déformable comportant au repos une section ellipsoïdale anti-rotation. Pour déconnecter les arbres, le dispositif de fixation comporte un logement avec lequel peut coopérer un outil inséré via l'arbre avant. Le passage de l'outil déforme l'anneau ce qui autorise la rotation et permet de retirer le dispositif de fixation.

Dans les faits, comme illustré sur la [Fig.3], il est souhaité de réduire le diamètre D203 de l'arbre de réducteur 203 afin de réduire l'encombrement radial du réducteur 103, en particulier pour les turbomoteurs d'aéronef 100 comprenant une soufflante 104 à pas variable ou une soufflante 104 non carénée qui présentent un diamètre important. Un tel arbre de réducteur 203 de diamètre réduit D203 présente l'inconvénient d'être trop étroit pour permettre le passage de la bague de liaison 207 lors d'une opération de maintenance. Une solution immédiate pour pallier cet inconvénient serait de passer non plus par l'intérieur de la ligne d'entraînement basse pression A mais par l'extérieur de celle-ci. Une telle solution est toutefois complexe à mettre en œuvre dans l'environnement chargé du turboréacteur d'aéronef 100.

L'invention vise ainsi à pouvoir désassembler de manière simple et pratique l'arbre de compresseur 201 et l'arbre de turbine 202 de la ligne d'entraînement basse pression A lors d'une opération de maintenance, notamment dans le cas d'un arbre de réducteur 203 de diamètre réduit. L'invention vise par ailleurs de manière générale à pouvoir désassembler de manière simple et pratique un arbre d'une ligne d'entraînement de turbomoteur d'aéronef.

### PRESENTATION DE L'INVENTION

L'invention concerne un arbre principal d'une ligne d'entraînement de turbomoteur d'aéronef selon la revendication 1 configuré pour être relié solidairement à un arbre arrière de la ligne d'entraînement, ledit arbre principal s'étendant longitudinalement d'avant en arrière selon un axe et se présentant sous la forme d'une pièce creuse définissant une cavité intérieure ouverte, ledit arbre principal comprenant une portion arrière configurée pour recevoir une portion avant de l'arbre arrière par emboîtement.

L'invention est remarquable en ce que l'arbre principal comprend :
- au moins un organe de rétention avant et au moins un organe de rétention arrière positionnés dans la cavité intérieure de manière à définir ensemble une prison et comprenant chacun une ouverture centrale, la portion avant de l'arbre arrière comprenant une extrémité avant configurée pour s'étendre dans l'ouverture centrale de l'organe de rétention arrière, et
- une bague de liaison située dans la prison et comprenant une extrémité arrière configurée pour être vissée avec l'extrémité avant de l'arbre arrière et pour venir en butée contre l'organe de rétention arrière, ladite bague de liaison comprenant une surface intérieure sur laquelle est formé au moins un organe de préhension accessible depuis une portion avant de l'arbre principal par un outillage s'étendant via l'ouverture centrale de l'organe de rétention avant, afin de permettre l'entraînement de la bague de liaison en rotation autour de l'axe longitudinal pour la visser à l'arbre arrière, de manière à relier solidairement l'arbre principal à l'arbre arrière.

Grâce à l'invention, l'arbre principal et l'arbre arrière d'une ligne d'entraînement peuvent être désassemblés de manière simple et pratique, en utilisant uniquement un outillage inséré dans la cavité intérieure de l'arbre principal par la portion avant. Ainsi, même si le diamètre intérieur d'accès est réduit, le désassemblage est possible étant donné que la bague de liaison demeure prisonnière et ne doit pas être extraite. De plus, un tel montage prisonnier permet d'utiliser une bague de liaison dont le diamètre est suffisant pour reprendre les efforts de l'arbre arrière, en particulier, lorsque celui-ci se présente sous la forme d'un arbre de turbine.

La bague de liaison de l'arbre principal et de l'arbre arrière s'étend en effet dans la cavité intérieure de l'arbre principal, ce qui nécessite uniquement un accès à l'avant pour la manipuler et n'entraîne aucun encombrement extérieur de la ligne d'entraînement. La bague de liaison est de plus montée prisonnière dans l'arbre principal ce qui évite de devoir l'extraire dans un espace potentiellement restreint et complexe, tel qu'un arbre avant de diamètre réduit, ou de devoir démonter l'éventuel arbre avant. La bague de liaison est en outre facilement manipulable grâce à l'organe de préhension formé sur sa surface intérieure, facilement accessible depuis l'avant par un outillage. L'invention est ainsi particulièrement adaptée pour un turbomoteur d'aéronef représentant un environnement chargé et complexe, où une maintenance régulière des pièces, telles que les arbres, est nécessaire.

Selon un aspect de l'invention, la bague de liaison est montée mobile axialement dans la prison entre une position de liaison et une position d'attente. Avantageusement, une telle bague de liaison déplaçable facilite la solidarisation et la désolidarisation de l'arbre principal et de l'arbre arrière. De préférence, en position de liaison, l'extrémité arrière de la bague de liaison s'étend en butée contre l'organe de rétention arrière et est configurée pour coopérer par vissage avec l'extrémité avant de la portion avant de l'arbre arrière, afin de relier solidairement l'arbre principal à l'arbre arrière. De préférence, en position d'attente, l'extrémité arrière de la bague de liaison s'étend libre à distance de l'organe de rétention arrière, afin de favoriser l'extraction de l'arbre arrière.

Selon un aspect préféré, l'extrémité arrière de la bague de liaison comprend une surface intérieure taraudée configurée pour coopérer par vissage avec une surface extérieure filetée de l'extrémité avant de l'arbre arrière. Il est ainsi aisé de centrer la bague de liaison et l'arbre arrière pour les visser.

De préférence, l'extrémité arrière de la bague de liaison comprend un diamètre extérieur supérieur au diamètre de l'ouverture centrale de l'organe de rétention arrière, afin de permettre la butée de la bague de liaison contre l'organe de rétention arrière. De préférence, la bague de liaison comprend une extrémité avant comprenant un diamètre extérieur supérieur au diamètre de l'ouverture centrale de l'organe de rétention avant. De tels organes de rétention avant et arrière empêchent avantageusement la bague de liaison de sortir de la prison.

Selon un aspect de l'invention, l'organe de préhension de la bague de liaison comprend un diamètre intérieur inférieur au diamètre intérieur de l'extrémité arrière de ladite bague de liaison. De préférence, l'organe de préhension de la bague de liaison comprend un diamètre intérieur inférieur au diamètre intérieur de l'extrémité avant de ladite bague de liaison. Un tel organe de préhension est avantageusement configuré pour coopérer avec un outillage de diamètre restreint qui peut ainsi facilement être inséré par la portion avant de l'arbre principal.

De préférence, l'organe de préhension comprend une pluralité de cannelures, permettant à l'outillage de visser aisément la bague de liaison à l'arbre arrière, en particulier sans rotation relative entre la bague de liaison et l'outillage.

Selon un aspect de l'invention, l'organe de rétention arrière est issu de matière de l'arbre principal et possède ainsi une rigidité optimale afin de résister au couple de serrage de la bague de liaison. De préférence, l'organe de rétention arrière se présente sous la forme d'une portion en saillie radiale intérieure s'étendant depuis la surface intérieure de l'arbre principal.

Selon un autre aspect préféré, l'organe de rétention avant est monté de manière rapportée dans la cavité intérieure de l'arbre principal, afin de permettre lors du montage de l'arbre principal, d'insérer la bague de liaison dans la prison.

Selon un aspect de l'invention, l'organe de rétention avant est configuré pour coopérer avec une extrémité avant de la bague de liaison et avec la surface intérieure de l'arbre principal de manière à maintenir fixe la bague de liaison par rapport à l'arbre principal. Un tel organe de rétention avant possède avantageusement deux fonctions, à savoir délimiter à l'avant la prison et bloquer le déplacement de la bague de liaison lorsque celle-ci n'est pas vissée.

Selon un aspect, l'organe de rétention avant est monté mobile axialement dans la cavité intérieure de l'arbre principal entre une position avant et une position arrière. De préférence, en position arrière, l'organe de rétention avant maintient fixe la bague de liaison en position de liaison par rapport à l'arbre principal, afin de sécuriser la solidarisation de l'arbre principal et de l'arbre arrière. Tout dévissage involontaire de la bague de liaison est ainsi éliminé. De préférence, en position avant, l'organe de rétention avant maintient fixe la bague de liaison en position d'attente par rapport à l'arbre principal, afin d'éviter que la bague de liaison ne se déplace d'elle-même dans la prison.

Selon un aspect préféré, l'organe de rétention avant comprend un élément de blocage rotationnel configuré pour coopérer avec l'extrémité avant de la bague de liaison et avec la surface intérieure de l'arbre principal pour empêcher une rotation par rapport à l'axe longitudinal de la bague de liaison relativement à l'arbre principal.

Selon un aspect préféré, l'organe de rétention avant comprend un élément de blocage axial configuré pour coopérer avec l'extrémité avant de la bague de liaison et avec la surface intérieure de l'arbre principal pour empêcher une translation par rapport à l'axe longitudinal de la bague de liaison relativement à l'arbre principal.

Selon un autre aspect préféré, l'extrémité avant de la bague de liaison est configurée pour être vissée avec l'extrémité arrière d'un organe de liaison configuré pour s'étendre dans l'ouverture centrale de l'organe de rétention avant. Une telle bague de liaison permet avantageusement de relier l'arbre principal d'une part à l'arbre arrière et d'autre part à un arbre avant.

Selon un aspect préféré, l'arbre principal est configuré pour être relié solidairement à un arbre avant de la ligne d'entraînement, la portion avant de l'arbre principal étant configurée pour recevoir une portion arrière de l'arbre avant par emboîtement. La bague de liaison permet avantageusement de solidariser et désolidariser l'arbre principal et l'arbre arrière en présence d'un arbre avant relié solidairement à l'arbre principal.

Selon un autre aspect préféré, la portion arrière de l'arbre principal comprend un organe de transmission de puissance configuré pour coopérer avec un organe de transmission de puissance de la portion avant de l'arbre arrière. De préférence, la portion avant de l'arbre principal comprend un organe de transmission de puissance configuré pour coopérer avec un organe de transmission de puissance de la portion arrière de l'arbre avant. De préférence, l'organe de transmission de puissance de la portion avant et/ou de la portion arrière de l'arbre principal se présente sous la forme de cannelures formées sur la surface intérieure de l'arbre principal. Un tel organe de transmission de puissance favorise la coopération entre l'arbre principal et l'arbre arrière/l'arbre avant.

L'invention concerne également une ligne d'entraînement d'un turbomoteur d'aéronef comprenant un arbre principal tel que décrit précédemment et un arbre arrière reliés solidairement, ledit arbre arrière s'étendant longitudinalement d'avant en arrière selon l'axe et se présentant sous la forme d'une pièce creuse, ledit arbre arrière comprenant une portion avant emboîtée dans la portion arrière dudit arbre principal, ladite portion avant de l'arbre arrière comprenant une extrémité avant s'étendant dans l'ouverture centrale de l'organe de rétention arrière et coopérant par vissage avec l'extrémité arrière de la bague de liaison.

De préférence, l'extrémité avant de l'arbre arrière comprend un diamètre extérieur inférieur au diamètre de l'ouverture centrale de l'organe de rétention arrière, afin d'être insérable facilement dans l'ouverture centrale de l'organe de rétention arrière.

De préférence, l'extrémité avant de l'arbre arrière comprend une surface extérieure filetée coopérant par vissage avec une surface intérieure taraudée de l'extrémité avant de la bague de liaison. Avantageusement, l'extrémité arrière de la bague de liaison comporte ainsi un plus grand diamètre que l'extrémité avant de l'arbre arrière, ce qui favorise la rétention de la bague de liaison dans la prison en limitant le diamètre de l'ouverture centrale de l'organe de rétention arrière.

De préférence, la portion avant de l'arbre arrière est en butée contre l'organe de rétention arrière, afin de favoriser l'assemblage de l'arbre principal et de l'arbre arrière. Préférentiellement, la portion avant de l'arbre arrière comprend un diamètre extérieur supérieur au diamètre de l'ouverture centrale de l'organe de rétention arrière, pour permettre la butée.

De préférence, la portion avant de l'arbre arrière comprend un organe de transmission de puissance coopérant avec l'organe de transmission de puissance de la portion arrière de l'arbre principal, se présentant de préférence sous la forme de cannelures formées sur la surface intérieure de la portion avant de l'arbre arrière. Ceci favorise l'assemblage de l'arbre principal et de l'arbre arrière.

La ligne d'entraînement comprend en outre un arbre avant et un organe de liaison reliant solidairement l'arbre principal et l'arbre avant, ledit arbre avant s'étendant longitudinalement d'avant en arrière selon l'axe et se présentant sous la forme d'une pièce creuse, ledit arbre avant comprenant une portion arrière emboîtée dans une portion avant dudit arbre principal.

L'organe de liaison est monté dans une cavité intérieure de l'arbre avant pour coopérer par vissage avec la bague de liaison. Un tel organe de liaison ne génère avantageusement aucun encombrement extérieur et est retirable par l'avant de l'arbre avant pour permettre à un outillage d'accéder à la bague de liaison sans avoir à démonter l'arbre avant de la ligne d'entraînement. Autrement dit, l'organe de liaison comprend un diamètre extérieur inférieur au diamètre intérieur de la cavité intérieure de l'arbre avant.

L'organe de liaison comprend :
- une extrémité arrière s'étendant dans l'ouverture centrale de l'organe de rétention avant et coopérant par vissage avec une extrémité avant de la bague de liaison et
- un organe de préhension accessible depuis une portion avant de l'arbre avant par un outillage, afin de permettre l'entraînement de l'organe de liaison en rotation autour de l'axe longitudinal pour le visser à la bague de liaison, de manière à relier solidairement l'arbre avant à l'arbre principal.

De préférence, l'organe de liaison se présente sous la forme d'une pièce non structurale, à savoir ne transmettant pas les efforts s'exerçant entre la bague de liaison et l'arbre avant. De préférence, la bague de liaison se présente sous la forme d'une pièce structurale, à savoir transmettant les efforts s'exerçant entre l'arbre principal et l'arbre arrière, notamment en traction et en cisaillement. De préférence, l'organe de liaison comporte de l'acier, en particulier, est réalisé en acier. De préférence, la bague de liaison comporte de l'acier, en particulier, est réalisée en acier.

De préférence, l'extrémité arrière de l'organe de liaison comprend une surface extérieure filetée coopérant par vissage avec une surface intérieure taraudée de l'extrémité avant de la bague de liaison. Avantageusement, l'extrémité avant de la bague de liaison comporte ainsi un plus grand diamètre que l'extrémité arrière de l'organe de liaison, ce qui favorise la rétention de la bague de liaison dans la prison en limitant le diamètre de l'ouverture centrale de l'organe de rétention avant.

De préférence, l'organe de préhension est formé sur la surface intérieure de l'organe de liaison pour être accessible par un outillage de diamètre restreint. Préférentiellement, l'organe de préhension comprend une pluralité de cannelures permettant à l'outillage de visser l'organe de préhension sans rotation relative entre l'organe de liaison et l'outillage.

Selon un aspect de l'invention, l'organe de liaison comprend une extrémité avant s'étendant en butée contre une extrémité arrière de la portion arrière de l'arbre avant, afin de solidariser l'arbre avant avec la bague de liaison.

De préférence, l'extrémité arrière de l'arbre avant se présente sous la forme d'une portion en saillie radiale intérieure pour assurer la butée. De préférence, l'extrémité avant de l'organe de liaison comprend une portion en saillie radiale extérieure pour assurer la butée.

Selon un aspect préféré, la ligne d'entraînement comprend en outre un organe de blocage configuré pour maintenir fixe l'organe de liaison par rapport à l'arbre avant, afin de sécuriser l'assemblage. De préférence, l'organe de blocage est configuré pour coopérer avec l'extrémité avant de l'organe de liaison et avec la surface intérieure de l'arbre avant.

L'invention concerne également un turbomoteur d'aéronef comprenant une ligne d'entraînement telle que décrite précédemment. De préférence, le turbomoteur s'étend longitudinalement selon l'axe et est configuré pour permettre la propulsion de l'aéronef à partir de l'accélération d'un flux d'air circulant d'amont en aval dans le turbomoteur, l'axe longitudinal étant orienté d'amont en aval. Un arbre principal orienté d'amont en aval permet avantageusement d'accéder à la bague de liaison depuis l'amont du turbomoteur, en particulier en retirant le cône de la soufflante du turbomoteur.

Selon un aspect, l'arbre principal se présente sous la forme d'un arbre de compresseur configuré pour être relié à un compresseur du turbomoteur, de préférence à un compresseur basse pression du turbomoteur. Pour un tel arbre de compresseur éloigné de l'extrémité amont du turbomoteur et présentant un accès réduit, la bague de liaison accessible par l'amont et montée prisonnière est particulièrement avantageuse.

Selon un aspect, l'arbre arrière se présente sous la forme d'un arbre de turbine configuré pour être relié à une turbine du turbomoteur s'étendant en aval du compresseur, l'arbre de compresseur étant configuré pour être relié solidairement à l'arbre de turbine de manière à ce que la rotation de la turbine engendrée par le flux d'air entraîne en rotation le compresseur. De préférence, l'arbre de turbine est configuré pour être relié à une turbine basse pression du turbomoteur.

Selon un aspect, l'arbre avant se présente sous la forme d'un arbre de réducteur configuré pour être relié à un réducteur du turbomoteur, le turbomoteur comprenant une entrée d'air comprenant une soufflante s'étendant en amont du compresseur, ledit réducteur étant relié à la soufflante et configuré pour réduire la vitesse de rotation transmise par la turbine à la soufflante, l'arbre de compresseur étant configuré pour être relié solidairement à l'arbre de réducteur de manière à ce que la rotation du compresseur entraîne en rotation la soufflante.

De préférence, l'arbre de réducteur comporte un diamètre réduit, à savoir un diamètre intérieur au moins localement inférieur à 60 mm. Un tel arbre de réducteur est adapté pour un turbomoteur comprenant une soufflante à pas variable et/ou une soufflante non carénée. De préférence, le turbomoteur d'aéronef se présente sous la forme d'un turboréacteur, de préférence à double flux comprenant une veine primaire radialement intérieure et une veine secondaire radialement extérieure.

De préférence, l'arbre avant comporte de l'acier, en particulier, est réalisé en acier. De préférence, l'arbre avant est convoluté pour favoriser l'alignement de la ligne d'entraînement. Selon un autre aspect préféré, l'arbre avant comporte au moins un élément de souplesse circonférentiel, se présentant préférentiellement sous la forme d'un soufflet.

Selon un aspect, la ligne d'entraînement se présente sous la forme d'une ligne d'entraînement basse pression de turbomoteur d'aéronef configurée pour s'étendre de manière coaxiale et radialement intérieure à une ligne d'entraînement haute pression du turbomoteur. De préférence, la ligne d'entraînement haute pression est configurée pour relier un compresseur haute pression et une turbine haute pression du turbomoteur. Une telle ligne d'entraînement basse pression présente un accès et un volume restreints du fait de la présence de la ligne d'entraînement haute pression.

L'invention concerne en particulier une ligne d'entraînement telle que décrite précédemment, se présentant sous la forme d'une ligne d'entraînement basse pression de turbomoteur d'aéronef configurée pour s'étendre de manière coaxiale et radialement intérieure à une ligne d'entraînement haute pression du turbomoteur, ledit turbomoteur s'étendant longitudinalement selon l'axe et étant configuré pour permettre la propulsion de l'aéronef à partir de l'accélération d'un flux d'air circulant d'amont en aval dans le turbomoteur, l'axe longitudinal étant orienté d'amont en aval, l'arbre principal se présentant sous la forme d'un arbre de compresseur configuré pour être relié à un compresseur basse pression du turbomoteur d'aéronef.

L'invention concerne également un procédé de démontage d'une ligne d'entraînement de turbomoteur d'aéronef telle que décrite précédemment, comprenant :
- une étape de dévissage de l'extrémité arrière de la bague de liaison au moyen d'un outillage inséré par la portion avant de l'arbre principal, s'étendant via l'ouverture centrale de l'organe de rétention avant et coopérant avec l'organe de préhension de la bague de liaison afin d'entraîner la bague de liaison en rotation autour de l'axe longitudinal, de manière à désolidariser la bague de liaison et l'arbre arrière, la bague de liaison demeurant prisonnière dans la prison, et
- une étape d'extraction de la portion avant de l'arbre arrière hors de la portion arrière de l'arbre principal, de manière à désolidariser l'arbre principal et l'arbre arrière.

Un tel procédé de démontage permet de désolidariser aisément l'arbre arrière de l'arbre principal, en dévissant la bague de liaison avec un outillage inséré par la portion avant de l'arbre principal. L'arbre arrière peut ainsi être démonté avec un accès réduit et sans démonter le ou arbres situés devant lui. Un tel procédé permet un gain de temps important.

De préférence, la bague de liaison est initialement en position de liaison, dans laquelle l'extrémité arrière de la bague de liaison s'étend en butée contre l'organe de rétention arrière et coopère par vissage avec l'extrémité avant de la portion avant de l'arbre arrière, afin de relier solidairement l'arbre principal à l'arbre arrière.

De préférence, à l'issue de l'étape de dévissage, la bague de liaison est en position d'attente, dans laquelle l'extrémité arrière de la bague de liaison s'étend libre à distance de l'organe de rétention arrière.

De préférence, l'organe de rétention avant est initialement en position arrière, dans laquelle il maintient fixe la bague de liaison en position de liaison par rapport à l'arbre principal, et le procédé de démontage comprend, avant l'étape de dévissage, une étape de libération de la bague de liaison par déplacement de l'organe de rétention avant.

De préférence, le procédé de démontage comprend, après l'étape de dévissage, une étape de sécurisation de la bague de liaison en position d'attente au moyen de l'organe de rétention avant en position avant, dans laquelle il maintient fixe la bague de liaison par rapport à l'arbre principal.

De préférence, le procédé comporte une étape d'extraction de l'organe de liaison. Un tel procédé de démontage permet de désolidariser l'arbre arrière en maintenant l'arbre avant et l'arbre principal emboîtés, via l'extraction de l'organe de liaison.

De préférence, l'étape d'extraction est mise en œuvre en déplaçant l'organe de liaison dans la cavité intérieure de l'arbre avant jusqu'à la portion avant de l'arbre avant.

De préférence, le procédé comprend, avant l'étape d'extraction, une étape de dévissage de l'extrémité arrière de l'organe de liaison au moyen d'un outillage inséré par la portion avant de l'arbre avant et coopérant avec l'organe de préhension de l'organe de liaison afin d'entraîner l'organe de liaison en rotation autour de l'axe longitudinal, de manière à désolidariser l'organe de liaison et la bague de liaison.

De préférence, le procédé comprend en outre, avant l'étape de dévissage, une étape de libération de l'organe de liaison par extraction de l'organe de blocage, de préférence en déplaçant l'organe de blocage dans la cavité intérieure de l'arbre avant jusqu'à la portion avant de l'arbre avant.

L'invention concerne également un procédé de montage de la ligne d'entraînement de turbomoteur d'aéronef dans lequel la bague de liaison s'étend prisonnière dans la prison de l'arbre principal, ledit procédé comprenant :
- une étape d'insertion de la portion avant de l'arbre arrière dans la portion arrière de l'arbre principal par emboîtement, de manière à solidariser l'arbre principal et l'arbre arrière et
- une étape de vissage de l'extrémité arrière de la bague de liaison avec l'extrémité avant de l'arbre arrière, au moyen d'un outillage inséré par la portion avant de l'arbre principal, s'étendant via l'ouverture centrale de l'organe de rétention avant et coopérant avec l'organe de préhension de la bague de liaison afin d'entraîner la bague de liaison en rotation autour de l'axe longitudinal, de manière à solidariser la bague de liaison et l'arbre arrière.

De préférence, la bague de liaison est initialement en position d'attente dans laquelle l'extrémité arrière de la bague de liaison s'étend libre à distance de l'organe de rétention arrière.

De préférence, à l'issue de l'étape de vissage, la bague de liaison est en position de liaison, dans laquelle l'extrémité arrière de la bague de liaison s'étend en butée contre l'organe de rétention arrière et coopère par vissage avec l'extrémité avant de la portion avant de l'arbre arrière, afin de relier solidairement l'arbre principal à l'arbre arrière.

De préférence, l'organe de rétention avant est initialement en position avant, dans laquelle il maintient fixe la bague de liaison en position d'attente par rapport à l'arbre principal, et le procédé de montage comprend, avant l'étape de vissage, une étape de libération de la bague de liaison par rapport à l'organe de rétention avant.

De préférence, le procédé de montage comprend, après l'étape de vissage, une étape de sécurisation de la bague de liaison en position de liaison au moyen de l'organe de rétention avant déplacé en position arrière, dans laquelle il maintient fixe la bague de liaison par rapport à l'arbre principal.

De préférence, ledit procédé comprend une étape d'insertion de l'organe de liaison. De préférence, l'étape d'insertion est mise en œuvre en déplaçant l'organe de liaison dans la cavité intérieure de l'arbre avant depuis la portion avant de l'arbre avant.

De préférence, le procédé de montage comprend, après l'étape d'insertion, une étape de vissage de l'extrémité arrière de l'organe de liaison avec l'extrémité avant de la bague de liaison au moyen d'un outillage inséré par la portion avant de l'arbre avant et coopérant avec l'organe de préhension de l'organe de liaison afin d'entraîner l'organe de liaison en rotation autour de l'axe longitudinal, de manière à solidariser l'organe de liaison et la bague de liaison.

De préférence, le procédé de montage comprend, après l'étape de vissage, une étape de sécurisation de l'organe de liaison au moyen de l'organe de blocage, de préférence inséré dans la cavité intérieure de l'arbre avant depuis la portion avant de l'arbre avant.

L'invention concerne par ailleurs le procédé de montage d'un arbre principal tel que décrit précédemment dans lequel la bague de liaison puis l'organe de rétention avant sont insérés depuis la portion avant de l'arbre principal dans la cavité intérieure, de manière à définir une prison dans laquelle s'étend prisonnière la bague de liaison.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables :
La [Fig.1] est une représentation schématique en demi-coupe longitudinale d'un turbomoteur d'aéronef à double flux avec une ligne d'entraînement basse pression selon l'art antérieur ;
La [Fig.2] est une représentation schématique fonctionnelle en coupe longitudinale de la ligne d'entraînement basse pression de la [Fig.1] avec une bague de liaison de l'arbre de compresseur et de l'arbre de turbine insérable par l'amont selon l'art antérieur ;
La [Fig.3] est une représentation schématique fonctionnelle en coupe longitudinale de la ligne d'entraînement basse pression de la [Fig.2] avec un arbre de réducteur de diamètre réduit selon l'art antérieur ;
La [Fig.4] est une représentation schématique en demi-coupe longitudinale d'un turbomoteur d'aéronef à double flux avec une ligne d'entraînement basse pression selon une forme de réalisation de l'invention ;
La [Fig.5] et
La [Fig.6] sont deux représentations schématiques en coupe longitudinale de la ligne d'entraînement basse pression de la [Fig.4] respectivement montée et démontée selon une forme de réalisation de l'invention ;
La [Fig.7] est une représentation schématique de la bague de liaison de la ligne d'entraînement basse pression de la [Fig.5] ;
La [Fig.8] est une représentation schématique de l'organe de liaison de la ligne d'entraînement basse pression de la [Fig.5] ;
La [Fig.9] est une représentation schématique des étapes du procédé de démontage de la ligne d'entraînement basse pression de la [Fig.5] ;
La [Fig.10] est une représentation schématique des étapes du procédé de montage de la ligne d'entraînement basse pression de la [Fig.5] ;
La [Fig.11] est une représentation schématique de l'étape de libération/blocage de l'organe de liaison et de l'étape de dévissage/vissage de l'organe de liaison selon le procédé de démontage/montage de la [Fig.9]/[Fig.10] ;
La [Fig.12] est une représentation schématique de l'étape d'extraction/d'insertion de l'organe de liaison selon le procédé de démontage/montage de la [Fig.9]/[Fig.10] ;
La [Fig.13] est une représentation schématique de l'étape de libération/blocage de la bague de liaison en position de liaison et de l'étape de dévissage/vissage de la bague de liaison selon le procédé de démontage/montage de la [Fig.9]/[Fig.10] ; et
La [Fig.14] est une représentation schématique de l'étape de sécurisation/déblocage de la bague de liaison en position d'attente et de l'étape d'extraction/d'insertion de l'arbre de turbine selon le procédé de démontage/montage de la [Fig.9]/[Fig.10].

Il faut noter que les figures exposent l'invention de manière détaillée pour mettre en œuvre l'invention, lesdites figures pouvant bien entendu servir à mieux définir l'invention le cas échéant.

### DESCRIPTION DETAILLEE DE L'INVENTION

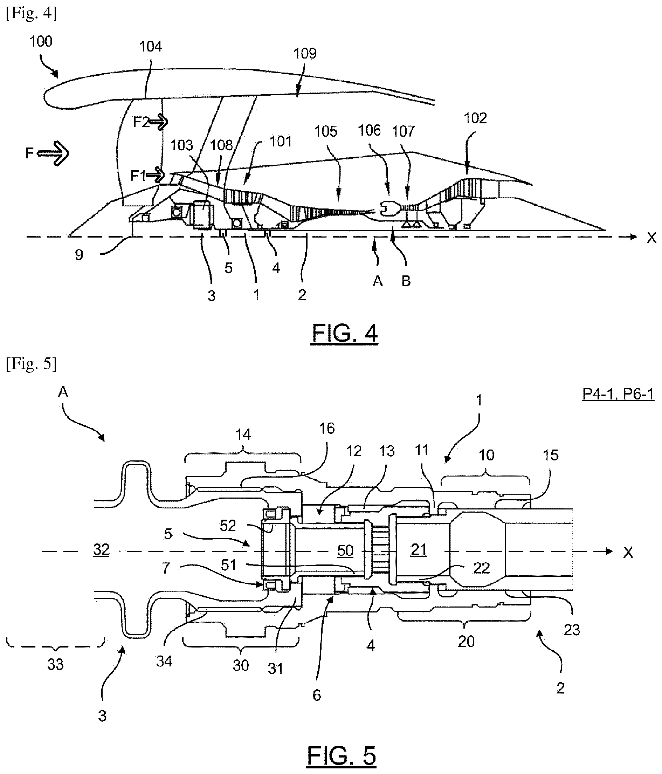

En référence à la [Fig.4], il est représenté un turboréacteur d'aéronef à double flux 100 s'étendant longitudinalement selon un axe X orienté d'amont en aval et configuré pour permettre la propulsion de l'aéronef à partir de l'accélération d'un flux d'air F circulant d'amont en aval dans le turboréacteur 100. Par la suite, les termes « amont » et « aval » sont définis par rapport à l'orientation de l'axe longitudinal X. Les termes « intérieur » et « extérieur » sont quant à eux définis selon la direction radiale par rapport à l'axe longitudinal X.

Toujours en référence à la [Fig.4] et comme décrit dans le préambule, le turboréacteur d'aéronef à double flux 100 comprend une veine primaire 108 radialement intérieure et une veine secondaire 109 radialement extérieure dans lesquelles circulent respectivement une première partie et une deuxième partie du flux d'air F, dites flux d'air primaire F1 et flux d'air secondaire F2. Par ailleurs, le turboréacteur 100 comprend d'amont en aval une entrée d'air comprenant une soufflante 104 permettant l'accélération du flux d'air F, des compresseurs basse pression 101 et haute pression 105 permettant l'accélération du flux d'air primaire F1, une chambre de combustion 106 de gaz avec le flux d'air primaire F1 et des turbines haute pression 107 et basse pression 102. La turbine haute pression 107 permet l'entraînement en rotation du compresseur haute pression 105 tandis que la turbine basse pression 102 permet l'entraînement en rotation du compresseur basse pression 101 et de la soufflante 104. Dans cet exemple, le turboréacteur 100 comprend en outre un réducteur 103 relié à la soufflante 104 et configuré pour réduire la vitesse de rotation transmise par la turbine basse pression 102 à la soufflante 104. Il va de soi que l'invention s'applique également à un turboréacteur dépourvu de réducteur 103.

Toujours en référence à la [Fig.4] et comme décrit dans le préambule, le turboréacteur 100 comprend une ligne d'entraînement basse pression A reliant le réducteur 103, le compresseur basse pression 101 et la turbine basse pression 102 ainsi qu'une ligne d'entraînement haute pression B reliant le compresseur haute pression 105 et la turbine haute pression 107. Dans cet exemple, les lignes d'entraînement basse pression A et haute pression B s'étendent de manière coaxiale selon l'axe longitudinal X. La ligne d'entraînement basse pression A s'étendant de manière radialement intérieure à la ligne d'entraînement haute pression B. Il va de soi que le nombre de lignes d'entrainement pourrait être différent. Il en va de même de leur positionnement relatif.

Comme illustré sur la [Fig.4] et décrit dans le préambule, la ligne d'entraînement basse pression A comprend d'amont en aval un arbre de réducteur 3, un arbre de compresseur 1 et un arbre de turbine 2, se présentant sous la forme de pièces creuses coaxiales d'axe longitudinal X et sur lesquels sont montés respectivement le réducteur 103, le compresseur basse pression 101 et la turbine basse pression 102.

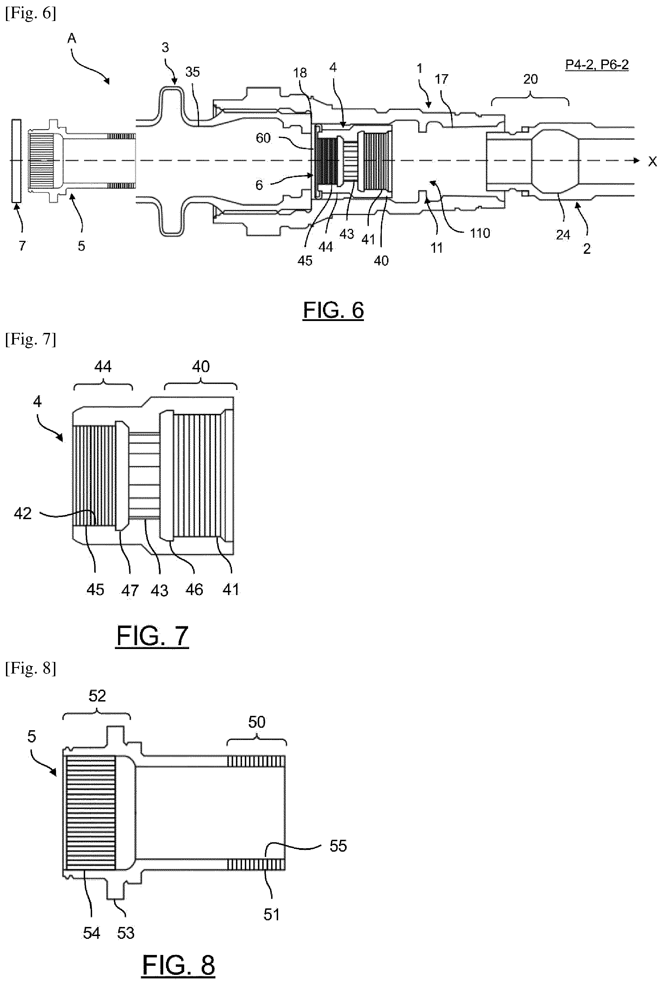

Selon l'invention et toujours en référence à la [Fig.4], la ligne d'entraînement basse pression A comprend en outre une bague de liaison 4 ([Fig.7]) reliant solidairement l'arbre de compresseur 1 et l'arbre de turbine 2, et de manière préférée, un organe de liaison 5 ([Fig.8]) reliant solidairement l'arbre de compresseur 1 et l'arbre de réducteur 3, comme ce sera présenté par la suite.

L'invention va être présentée pour la liaison d'un arbre de compresseur 1 et d'un arbre de turbine 2 et la liaison d'un arbre de compresseur 1 et d'un arbre de réducteur 3 mais il va de soi que les arbres pourraient être de natures différentes.

Dans l'exemple de la [Fig.5] et de la [Fig.6], l'arbre de compresseur 1 se présente sous la forme d'une pièce creuse d'axe longitudinal X comprenant une surface intérieure 17 définissant une cavité intérieure 12, dans laquelle sont montés un organe de rétention avant 6, une bague de liaison 4 et un organe de rétention arrière 11 entre une portion avant 14 et une portion arrière 10.

Comme illustré sur la [Fig.5] et la [Fig.6], la portion avant 14 et la portion arrière 10 sont configurées pour recevoir par emboîtement respectivement une portion arrière 30 de l'arbre de réducteur 3 et une portion avant 20 de l'arbre de turbine 2. La portion avant 14 et la portion arrière 10 de l'arbre de compresseur 1 comprennent chacune un élément de butée pour limiter axialement l'emboîtement. Dans cet exemple, en référence à la [Fig.6], l'élément de butée de la portion avant 14 se présente sous la forme d'un rétrécissement 18 du diamètre de la surface intérieure 17. L'élément de butée de la portion arrière 10 se présente quant à lui sous la forme de l'organe de rétention arrière 11.

La portion avant 14 et la portion arrière 10 de l'arbre de compresseur 1 comprennent chacune un organe de transmission de puissance 15, 16 configuré pour coopérer avec des organes de transmission de puissance 34, 23 de l'arbre de réducteur 3 et de l'arbre de turbine 2 afin de permettre la transmission d'un couple de l'arbre de turbine 2 à l'arbre de compresseur 1 puis à l'arbre de réducteur 2. De manière préférée, les organes de transmission de puissance 16, 15, 34, 23 se présentent quant à eux sous la forme de cannelures formées sur la surface intérieure 17, 35, 24 de l'arbre de compresseur 1, de l'arbre de réducteur 3 et de l'arbre de turbine 2. Les arbres 1, 2, 3 sont ainsi couplés en rotation.

Comme cela va être maintenant présentée, la bague de liaison 4 permet de solidariser axialement l'arbre de compresseur 1 et l'arbre de turbine 2 tandis que l'organe de liaison 5 permet de solidariser axialement l'arbre de compresseur 1 et l'arbre de réducteur 3.

Toujours dans l'exemple de la [Fig.5] et de la [Fig.6], l'organe de rétention avant 6 et l'organe de rétention arrière 11 définissent ensemble une prison 13 dans la cavité intérieure 12 dans laquelle la bague de liaison 4 est montée prisonnière afin de limiter son déplacement axial. La bague de liaison 4 est mobile entre une position de liaison P4-1 avec l'arbre de turbine 2 et une position d'attente P4-2 qui seront présentées par la suite. L'utilisation d'une prison 13 permet avantageusement de conserver un diamètre de bague de liaison 4 suffisamment élevé pour permettre une liaison axiale tout en ayant un arbre de réducteur 3 ayant un diamètre intérieur réduit.

Dans l'exemple de la [Fig.5] et de la [Fig.6], l'organe de rétention arrière 11 est issu de matière de l'arbre de compresseur 1 et se présente sous la forme d'une portion en saillie radiale intérieure de la surface intérieure 17. L'organe de rétention arrière 11 est configuré pour former un double élément de butée, à l'amont pour la bague de liaison 4 et à l'aval pour l'arbre de turbine 2. L'organe de rétention arrière 11 comprend une ouverture centrale 110 pour laisser passer une extrémité avant 21 de la portion avant 20 de l'arbre de turbine 2 afin de pouvoir solidariser la bague de liaison 4 et l'arbre de turbine 2 de part et d'autre de l'organe de rétention arrière 11. En pratique, l'ouverture centrale 110 de l'organe de rétention arrière 11 comporte un diamètre inférieur au diamètre extérieur de la bague de liaison 4 pour la retenir dans la prison 13. A l'inverse, l'ouverture centrale 110 de l'organe de rétention arrière 11 comporte un diamètre supérieur au diamètre extérieur de l'extrémité avant 21 de l'arbre de turbine 2 pour la laisser passer.

Ainsi, la bague de liaison 4 s'étend strictement entre l'organe de rétention avant 6 et l'organe de rétention arrière 11. De plus, l'extrémité arrière de la bague de liaison 4 comporte un diamètre supérieur à celui de l'organe de rétention arrière 11. De même, l'extrémité avant de la bague de liaison 4 comporte un diamètre supérieur à celui de l'organe de rétention avant 6.

Dans l'exemple de la [Fig.5] et de la [Fig.6], l'organe de rétention avant 6 est quant à lui monté de manière rapportée dans la cavité intérieure 12 de l'arbre de compresseur 1 de manière à pouvoir accéder à la bague de liaison 4.

Selon un aspect préféré, l'organe de rétention avant 6 est monté mobile dans la cavité intérieure 12 entre une position arrière P6-1 illustrée sur la [Fig.5], dans laquelle il maintient fixe la bague de liaison 4 en position de liaison P4-1 par rapport à l'arbre de compresseur 1, et une position avant P6-2 illustrée sur la [Fig.6], dans laquelle il maintient fixe la bague de liaison 4 en position d'attente P4-2 par rapport à l'arbre de compresseur 1.

L'organe de rétention avant 6 est configuré pour coopérer avec la bague de liaison 4 et avec la surface intérieure 17 de l'arbre de compresseur 1, afin de maintenir fixe la bague de liaison 4 par rapport à l'arbre de compresseur 1. Plus précisément, l'organe de rétention avant 6 en position arrière P6-1 bloque la bague de liaison 4 en position de liaison P4-1 afin d'éviter tout dévissage involontaire. L'organe de rétention avant 6 en position avant P6-2 bloque la bague de liaison 4 en position d'attente P4-2 pour éviter tout débattement dans la prison 13. L'organe de rétention avant 6 comprend de préférence un élément de blocage rotationnel, tel qu'un frein d'arrêt, et un élément de blocage axial, tel qu'un circlip. L'organe de rétention avant 6 comprend en outre une ouverture centrale 60 afin de laisser passer un outillage pour la manipulation de la bague de liaison 4. L'ouverture centrale 60 permet en outre de laisser passer une extrémité arrière 50 de l'organe de liaison 5 afin de permettre sa coopération avec la bague de liaison 4. En pratique, le diamètre de l'ouverture centrale 60 est inférieur au diamètre extérieur de la bague de liaison 4 pour la retenir.

En référence à la [Fig.5] et à la [Fig.6], la bague de liaison 4 est située dans la prison 13 de l'arbre de compresseur 1 et est configurée pour le solidariser d'une part à l'arbre de turbine 2 et d'autre part, en coopération avec l'organe de liaison 5, avec l'arbre de réducteur 3. Plus précisément, en position de liaison P4-1 ([Fig.5]), la bague de liaison 4 coopère avec l'arbre de turbine 2, en butée contre l'organe de rétention arrière 11 et sécurisée par l'organe de rétention avant 6. En position d'attente P4-2 ([Fig.6]), la bague de liaison 4 est maintenue fixe dans la prison 13 par l'organe de rétention avant 6.

De manière préférée, la bague de liaison 4 se présente de préférence sous la forme d'une pièce structurale, permettant à l'arbre de compresseur 1 de reprendre les efforts de l'arbre de turbine 2.

En référence à la [Fig.7], la bague de liaison 4 se présente sous la forme d'une pièce creuse comprenant une surface intérieure 42, une extrémité avant 44 configurée pour coopérer par vissage avec l'organe de liaison 5 et une extrémité arrière 40 configurée pour coopérer avec l'arbre de turbine 2. L'extrémité avant 44 est de plus configurée pour coopérer avec l'organe de rétention avant 6 tandis que l'extrémité arrière 40 est configurée pour venir en butée contre l'organe de rétention arrière 11. Plus précisément, l'extrémité avant 44 et l'extrémité arrière 40 comprennent chacune une surface intérieure taraudée 45, 41 qui sont configurées respectivement pour coopérer avec des surfaces extérieures filetées 22, 51 de l'arbre de turbine 2 et de l'organe de liaison 5.

Un organe de préhension 43 est formé sur la surface intérieure 42 entre l'extrémité avant 44 et l'extrémité arrière 40, séparé des surfaces intérieures taraudées 45, 41 par un organe de séparation avant 47 et un organe de séparation arrière 46. Toujours en référence à la [Fig.7], l'organe de préhension 43 est configuré pour coopérer avec un outillage afin d'entraîner en rotation la bague de liaison 4 et de permettre sa coopération avec l'arbre de turbine 2. Dans l'exemple de la [Fig.7], l'organe de préhension 43 se présente sous la forme de cannelures formées sur la surface intérieure 42 permettant une bonne coopération avec l'outillage, et en particulier pour permettre à l'outillage de transmettre un couple de rotation à la bague de liaison 4 pour permettre son vissage. Dans cet exemple, l'organe de préhension 43 comprend un diamètre intérieur inférieur à celui de l'extrémité avant 44 et de l'extrémité arrière 40, permettant une coopération avec un outillage de diamètre réduit, facilement insérable dans la ligne d'entraînement basse pression A.

Dans l'exemple de la [Fig.7], l'organe de séparation avant 47 et l'organe de séparation arrière 46 se présentent sous la forme d'une encoche annulaire transversale permettant respectivement de limiter axialement le vissage à l'organe de liaison 5 et à l'arbre de turbine 2.

Un taraudage de l'extrémité avant 44 et de l'extrémité arrière 40 est préféré à un filetage afin d'éviter un jeu radial important de la bague de liaison 4 dans la prison 13.

Dans la position de liaison P4-1, comme illustré sur la [Fig.5], l'extrémité arrière 40 de la bague de liaison 4 est en butée contre l'organe de rétention arrière 11 et coopère par vissage avec l'extrémité avant 21 de la portion avant 20 de l'arbre de turbine 2, afin de relier solidairement axialement l'arbre de compresseur 1 à l'arbre de turbine 2. Dans la position d'attente P4-2, comme illustré sur la [Fig.6], l'extrémité arrière 40 de la bague de liaison 4 s'étend libre à distance de l'organe de rétention arrière 11, afin de pouvoir désolidariser l'arbre de turbine 2.

Pour résumer, il est prévu selon l'invention une bague de liaison 4 montée prisonnière dans la cavité intérieure 12 d'un arbre de compresseur 1 et dont l'extrémité arrière 40 coopère par vissage avec une extrémité avant 21 d'un arbre de turbine 2, afin de les solidariser. Un organe de rétention arrière 11 retient la bague de liaison 4 prisonnière à l'aval tout en laissant passer l'extrémité avant 21 de l'arbre de turbine 2 pour permettre la solidarisation. Un organe de rétention avant 6 retient la bague de liaison 4 prisonnière à l'amont et interdit son dévissage. L'organe de rétention avant 6 maintient en outre la bague de liaison 4 fixe lorsque l'arbre de turbine 2 est désolidarisé.

Comme décrit précédemment, il est également prévu un organe de liaison 5 reliant l'arbre de compresseur 1 et l'arbre de réducteur 3. Un organe de blocage 7 est configuré pour maintenir fixe l'organe de liaison 5 par rapport à l'arbre de réducteur 3, de manière à sécuriser la coopération de l'organe de liaison 5 et de la bague de liaison 4.

En référence à la [Fig.5] et à la [Fig.6], l'organe de liaison 5 et l'organe de blocage 7 sont montés dans la cavité intérieure 32 de l'arbre de réducteur 3, insérés par une portion avant 33 de l'arbre de réducteur 3. L'organe de liaison 5 coopère avec la bague de liaison 4 pour solidariser l'arbre de réducteur 3 à l'arbre de compresseur 1. L'organe de blocage 7 coopère quant à lui avec la surface intérieure 35 de l'arbre de réducteur 3 et avec l'organe de liaison 5 pour sécuriser la solidarisation. De préférence, l'organe de blocage 7 comprend, de manière analogue à l'organe de rétention avant 6, un élément de blocage rotationnel, tel qu'un frein d'arrêt, et un élément de blocage axial, tel qu'un circlip, pour une sécurisation optimale.

En référence à la [Fig.8], l'organe de liaison 5 se présente sous la forme d'une pièce creuse comprenant une surface intérieure 55, une extrémité avant 52 configurée pour coopérer avec l'arbre de réducteur 3 et une extrémité arrière 50 configurée pour coopérer avec la bague de liaison 4. Plus précisément, l'extrémité arrière 50 est configurée pour s'étendre dans l'ouverture centrale 60 de l'organe de rétention avant 6 et comprend une surface extérieure filetée 51 configurée pour coopérer par vissage avec la surface intérieure taraudée 45 de la bague de liaison 4.

Toujours en référence à la [Fig.8], l'extrémité avant 52 comprend quant à elle une portion en saillie radiale extérieure 53 et un organe de préhension 54 formé sur la surface intérieure 55 de la l'organe de liaison 5. La portion en saillie radiale extérieure 53 est configurée pour s'étendre en butée contre une extrémité arrière 31 de la portion arrière 30 de l'arbre de réducteur 3, afin de solidariser l'arbre de réducteur 3 à la bague de liaison 4. Pour une butée optimale, l'extrémité arrière 31 de l'arbre de réducteur 3 se présente sous la forme d'un rebord en saillie intérieure. L'organe de préhension 54 est quant à lui configuré pour coopérer avec un outillage afin d'entraîner en rotation l'organe de liaison 5 et de permettre sa coopération avec la bague de liaison 4. Dans l'exemple de la [Fig.8], l'organe de préhension 54 se présente sous la forme de cannelures formées sur la surface intérieure 55 permettant une bonne coopération avec l'outillage pour transmettre un couple de vissage.

De préférence, l'organe de liaison 5 se présente de préférence sous la forme d'une pièce souple, c'est à dire non structurale qui fait transiter très peu d'efforts. Le diamètre de l'organe de liaison 5 est choisi en fonction de celui de l'arbre de réducteur 3 et est inférieur au diamètre intérieur dudit arbre de réducteur 3 afin de permettre son insertion et son extraction. Le caractère non structural de l'organe de liaison 5 permet avantageusement de limiter son diamètre.

Autrement dit, il est prévu selon un aspect préféré de l'invention que la bague de liaison 4 coopère par vissage d'une part avec l'arbre de turbine 2, au niveau de son extrémité arrière 40, et d'autre part avec un organe de liaison 5, au niveau de son extrémité avant 44. La bague de liaison 4 permet ainsi de solidariser l'arbre de compresseur 1 et l'arbre de turbine 2 et coopère avec l'organe de liaison 5 pour solidariser l'arbre de compresseur 1 et l'arbre de réducteur 3.

Grâce à l'invention, l'arbre de compresseur 1 et l'arbre de turbine 2 d'une ligne d'entraînement basse pression A sont solidarisés de manière fiable et sécurisée. De plus, ils peuvent être désolidarisés de manière simple et pratique grâce à la bague de liaison 4 montée prisonnière dans l'arbre de compresseur 1. L'organe de préhension 43 de la bague de liaison 4 permet à un outillage de la manipuler à distance depuis l'amont pour la visser et la dévisser à l'arbre de turbine 2. En particulier, en présence d'un arbre de réducteur 3, la bague de liaison 4 permet de désolidariser l'arbre de turbine 2 sans démonter les arbres en amont, i.e. l'arbre de compresseur 1 et l'arbre de réducteur 3. Une bague de liaison 4 prisonnière permet à cette dernière d'avoir un diamètre important, en particulier supérieure à celui du diamètre intérieur de l'arbre de réducteur 3, pour reprendre les efforts de l'arbre de turbine 2. Il est uniquement nécessaire d'extraire l'organe de liaison 5 par l'amont de la ligne d'entraînement basse pression A, en pratique par le cône de la soufflante 104. Ceci permet un gain de temps notamment dans le cas d'une maintenance de la turbine basse pression 102.

L'invention est particulièrement adaptée pour un arbre de réducteur 3 de diamètre réduit, à savoir dont le diamètre intérieur est au moins localement inférieur à 60mm. Un tel arbre de réducteur 3 est prévu notamment en présence d'une soufflante 104 à pas variable ou encore une soufflante 104 non carénée, qui comportent un diamètre important nécessitant de réduire celui de l'arbre de réducteur 3. De préférence, l'arbre de réducteur 3 comporte de l'acier. De préférence, l'arbre avant est convoluté pour favoriser l'alignement de la ligne d'entraînement A. Alternativement, l'arbre de réducteur 3 comporte au moins un élément de souplesse circonférentiel, se présentant préférentiellement sous la forme d'un soufflet.

Par ailleurs, il va de soi que l'invention ne se limite pas à la liaison d'un arbre de compresseur 1 avec un arbre de turbine 2 et un arbre de réducteur 3 d'une ligne d'entraînement basse pression A de turboréacteur d'aéronef à double flux 100, tel que présenté précédemment. L'invention englobe en effet la liaison de tout arbre principal 1 avec un arbre arrière 2 d'une ligne d'entraînement A quelconque de turbomoteur d'aéronef 100 quelconque. L'invention englobe notamment la liaison de tout arbre principal 1 d'une part avec un arbre arrière 2 et d'autre part avec un arbre avant 3 d'une ligne d'entraînement A quelconque de turbomoteur d'aéronef 100 quelconque. A noter que les termes « avant » et « arrière » se référant ici à l'amont et à l'aval du turbomoteur d'aéronef 100 pourraient être inversés. La description précédente et celle qui suit sont ici adaptables à une autre forme de réalisation en remplaçant les termes : « arbre de compresseur 1 », « arbre de turbine 2 », « arbre de réducteur 3 », « amont », « aval », ligne d'entraînement basse pression A » et « turboréacteur d'aéronef à double flux 100 » respectivement par : « arbre principal 1 », « arbre arrière 2 », « arbre avant 3 », « avant », arrière », « ligne d'entraînement A » et « turbomoteur d'aéronef 100 ».

On décrit par la suite un procédé de démontage de la ligne d'entraînement basse pression A précédemment présentée, permettant de désolidariser l'arbre de turbine 2 de l'arbre de compresseur 1, en maintenant l'arbre de réducteur 3 et l'arbre de compresseur 1 emboîtés. Un tel procédé de démontage est par exemple mis en œuvre lors d'une étape de maintenance de la turbine basse pression 102.

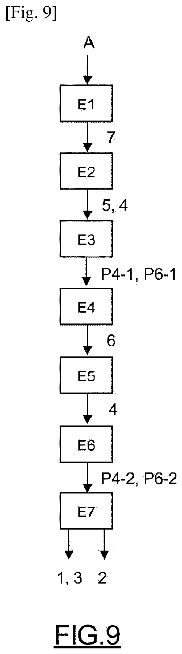

En référence à la [Fig.9], le procédé de démontage de la ligne d'entraînement basse pression A vise dans un premier temps, à retirer l'organe de liaison 5, via une étape de libération E1, une étape de dévissage E2 et une étape d'extraction E3, puis dans un second temps, à désolidariser la bague de liaison 4, via une étape de libération E4, une étape de dévissage E5 et une étape de sécurisation E6, afin de pouvoir retirer l'arbre de turbine 2 lors d'une étape d'extraction E7.

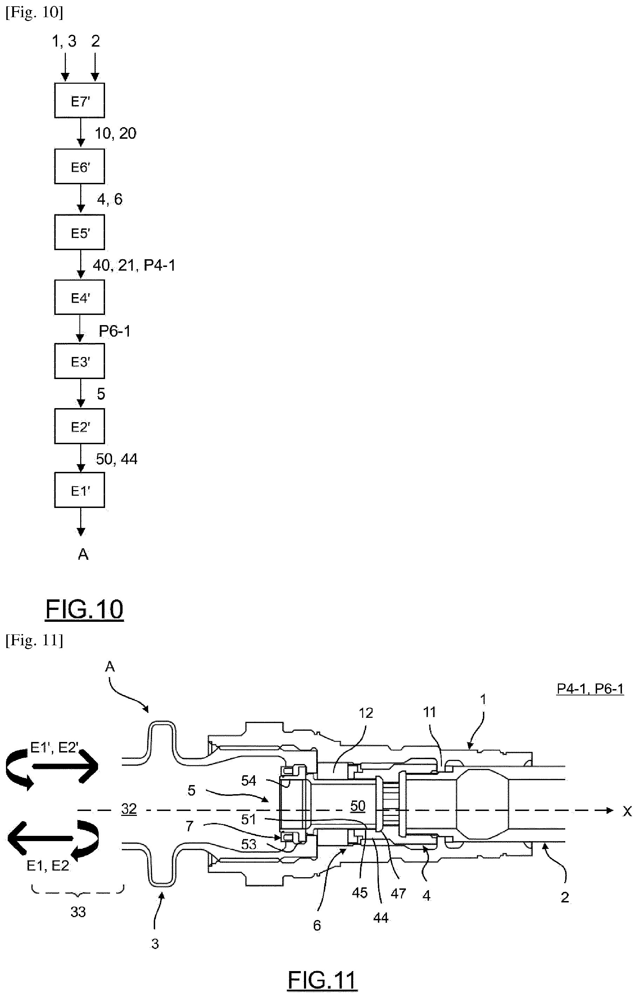

Comme illustré sur la [Fig.11], l'arbre de réducteur 3, l'arbre de compresseur 1 et l'arbre de turbine 2 sont initialement reliés de manière solidaire, de manière à ce que l'entraînement en rotation de l'arbre de turbine 2 entraîne en rotation l'arbre de compresseur 1 et l'arbre de réducteur 3. Autrement dit, la bague de liaison 4 est initialement en position de liaison P4-1 et l'organe de rétention avant 6 en position arrière P6-1, ce qui assure la solidarisation axiale de l'arbre de compresseur 1 et de l'arbre de turbine 2. De plus, l'organe de liaison 5 coopère avec la bague de liaison 4 et l'organe de blocage 7 sécurise la coopération, ce qui assure la solidarisation de l'arbre de compresseur 1 et de l'arbre de réducteur 3.

Avant la mise en œuvre du procédé de démontage, le cône de la soufflante 104 est démonté de manière à ce que la portion avant 33 de l'arbre de réducteur 3 soit accessible.

Toujours en référence à la [Fig.11], lors de l'étape de libération E1, un outillage est inséré par la portion avant 33 de l'arbre de réducteur 3, afin de venir désolidariser l'organe de blocage 7 et le retirer par l'avant. L'organe de liaison 5 à la fin de l'étape de libération E1 n'est ainsi plus maintenu fixe par l'organe de blocage 7.

Toujours en référence à la [Fig.11], lors de l'étape de dévissage E2, un outillage est de nouveau inséré par la portion avant 33 de l'arbre de réducteur 3, afin de venir coopérer avec l'organe de préhension 54 de l'organe de liaison 5. La rotation de l'outillage permet d'entraîner en rotation l'organe de liaison 5 et ainsi dévisser son extrémité arrière 50. A la fin de l'étape de dévissage E2, l'extrémité arrière 50 de l'organe de liaison 5 ne coopère plus avec l'extrémité avant 44 de la bague de liaison 4. Suite au dévissage, l'arbre de réducteur 3 n'est plus bloqué axialement par rapport à l'arbre de compresseur 2.

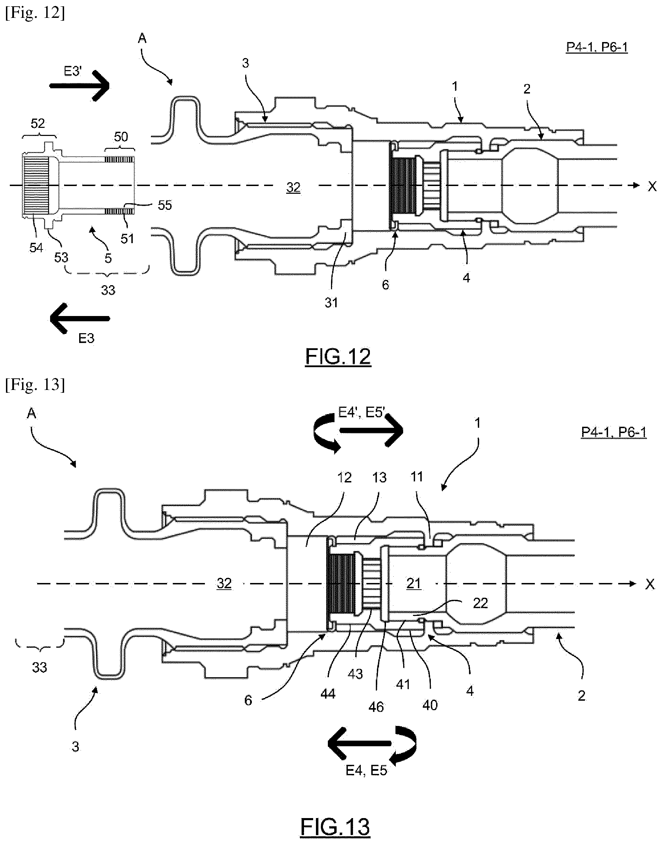

En référence à la [Fig.12], l'étape d'extraction E3 de l'organe de liaison 5 est mise en œuvre en le déplaçant dans la cavité intérieure 32 jusqu'à la portion avant 33 de l'arbre de réducteur 3. A la fin de l'étape d'extraction E3, la bague de liaison 4, et notamment l'organe de préhension 43, est accessible depuis l'amont de la ligne d'entraînement basse pression A. Dans cet exemple de mise en œuvre, l'arbre de réducteur 3 est toujours emboîté dans l'arbre de compresseur 1, et le reste pour les étapes suivantes du procédé de démontage.

En référence à la [Fig.13], lors de l'étape de libération E4, un outillage est inséré par la portion avant 33 de l'arbre de réducteur 3, afin de venir déplacer l'organe de rétention avant 6 vers l'avant qui interdit toute rotation de la bague de liaison 4. Ainsi, à la fin de l'étape de libération E4, l'organe de rétention avant 6 a été déplacé de sa position arrière P6-1 et ne maintient plus la bague de liaison 4 en position de liaison P4-1 qui peut alors être dévissée.

Toujours en référence à la [Fig.13], lors de l'étape de dévissage E5, un outillage est de nouveau inséré par la portion avant 33 de l'arbre de réducteur 3, afin de venir coopérer avec l'organe de préhension 43 de la bague de liaison 4, en particulier, par l'ouverture centrale 60 de l'organe de rétention avant 6. La rotation de l'outillage permet d'entraîner en rotation la bague de liaison 4 et ainsi de dévisser son extrémité arrière 40. A la fin de l'étape de dévissage E5, l'extrémité arrière 40 de la bague de liaison 4 ne coopère plus avec l'extrémité avant 21 de l'arbre de turbine 2. Il n'existe ainsi plus de liaison axiale entre l'arbre de compresseur 1 et l'arbre de turbine 1. Lors du dévissage, la bague de liaison 4 se déplace vers l'avant dans sa prison 13. Il n'est pas nécessaire de la retirer entièrement comme dans l'art antérieur. Cela permet de conserver une bague de liaison 4 de section importante afin d'assurer un blocage axial optimal.

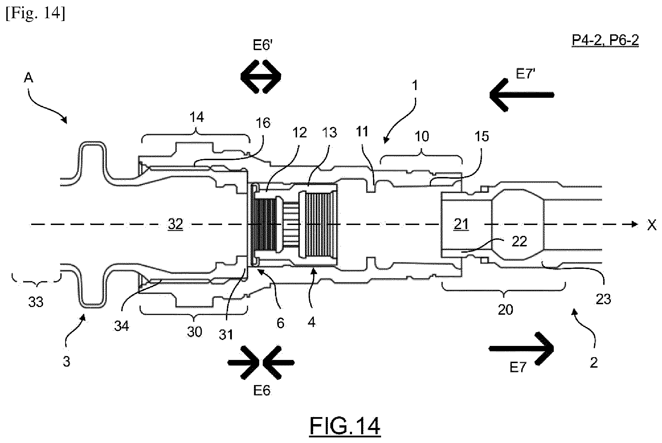

En référence à la [Fig.14], il est réalisé une étape de sécurisation E6 de la bague de liaison 4 en faisant coopérer la bague de liaison 4 et l'organe de rétention avant 6. A la fin de l'étape de sécurisation E6, la bague de liaison 4 est en position d'attente P4-2 et l'organe de rétention avant 6 est en position avant P6-2. Une telle étape de sécurisation E6 permet d'éviter tout déplacement involontaire de la bague de liaison 4 dans la prison 13.

La [Fig.14] illustre également l'extraction de la portion avant 20 de l'arbre de turbine 2 hors de la portion arrière 10 de la bague de liaison 4. A la fin du procédé de démontage, l'arbre de compresseur 1 et l'arbre de réducteur 3 sont toujours emboîtés.

A noter que l'étape de sécurisation E6 de la bague de liaison 4 et l'étape d'extraction E7 de l'arbre de turbine 2 peuvent être mises en œuvre dans un ordre quelconque. A noter également qu'un même outillage ou des outillages différents peuvent être utilisés pour la mise en œuvre des différentes étapes du procédé de démontage. En particulier, un outillage peut être maintenu inséré dans la cavité intérieure 32 de l'arbre de réducteur 3 entre deux étapes pour limiter les manipulations.

Un tel procédé de démontage permet avantageusement de désolidariser de manière simple et pratique l'arbre de turbine 2, sans démonter les arbres situés en amont, i.e. l'arbre de compresseur 1 et l'arbre de réducteur 3, ce qui permet un gain de temps notable. En outre, le procédé de démontage peut être mis en œuvre pour un arbre de réducteur 3 de diamètre quelconque, et en particulier de diamètre réduit, grâce à la bague de liaison 4 montée prisonnière.

L'invention concerne également un procédé de montage de l'arbre de turbine 2 sur la ligne d'entraînement basse pression A, mis en œuvre notamment après le procédé de démontage précédemment présenté afin de remonter la ligne d'entraînement basse pression une fois la maintenance accomplie.

Comme illustré sur la [Fig.10], le procédé de montage comprend les mêmes étapes que le procédé de démontage, mises en œuvre de manière inverse et dans l'ordre inverse. Autrement dit, le procédé de montage vise à emboîter l'arbre de turbine 2 dans l'arbre de compresseur 1 lors d'une étape d'insertion E7' puis dans un premier temps, à solidariser la bague de liaison 4, via une étape de libération E6', une étape de vissage E5' et une étape de sécurisation E4', et dans un second temps, à solidariser l'organe de liaison 5, via une étape d'insertion E3', une étape de vissage E2' et une étape de sécurisation E1'.

Plus précisément, en référence à la [Fig.14], l'arbre de compresseur 1 et l'arbre de réducteur 3 sont initialement emboîtés mais non solidarisés axialement par l'organe de liaison 5. La bague de liaison 4 et l'organe de rétention avant 6 sont respectivement en position d'attente P4-2 et en position avant P6-2.

Toujours en référence à la [Fig.14], le procédé de montage débute en insérant par emboîtement la portion avant 20 de l'arbre de turbine 2 dans la portion arrière 10 de l'arbre de compresseur 1 (étape d'insertion E7') jusqu'à ce que l'arbre de turbine 2 entre en butée avec l'organe de rétention arrière 11. Lors de l'étape d'insertion, les cannelures des arbres 1, 2 coopèrent ensemble.

Dans cet exemple de mise en œuvre, l'organe de rétention avant 6 est désolidarisé de la bague de liaison 4, au moyen d'un outillage inséré par la portion avant 33 de l'arbre de réducteur 3 (étape de libération E6'). A la fin de l'étape de libération E6', l'organe de rétention avant 6 a été déplacé de sa position avant P6-2 et ne maintient plus la bague de liaison 4 en position d'attente P4-2. L'étape d'insertion E7' et l'étape de libération E6' peuvent être mises en œuvre dans un ordre quelconque.

En référence à la [Fig.13], lors de l'étape de vissage E5', un outillage est inséré par la portion avant 33 de l'arbre de réducteur 3, afin de venir coopérer avec l'organe de préhension 43 de la bague de liaison 4. L'outillage s'introduit dans l'ouverture centrale 60 de l'organe de rétention avant 6. La rotation de l'outillage permet d'entraîner en rotation la bague de liaison 4 et ainsi visser son extrémité arrière 40 à l'extrémité avant 21 de l'arbre de turbine 2. Le couple de serrage est élevé de manière à ce que la bague de liaison 4 reprenne les efforts de l'arbre de turbine 2. De manière avantageuse, la bague de liaison 4 peut se déplacer axialement dans sa prison 13 pour atteindre l'extrémité avant 21 de l'arbre de turbine 2.

A la fin de l'étape de vissage E5', la bague de liaison 4 est en position de liaison P4-1. L'organe de rétention arrière 11 de l'arbre de compresseur 1 est pris en sandwich entre la bague de liaison 4 et l'arbre de turbine 2, ce qui solidarise axialement l'arbre de compresseur 1 et l'arbre de turbine 2.

L'étape de sécurisation E4' est ensuite mise en œuvre en solidarisant l'organe de rétention avant 6 à la bague de liaison 4 en position de liaison P4-1. Ainsi, tout desserrage involontaire du fait des vibrations est éliminé. A la fin de l'étape de sécurisation E4', l'organe de rétention avant 6 est en position arrière P6-1.

En référence à la [Fig.11] et à la [Fig.12], l'organe de liaison 5 est ensuite inséré par la portion avant 33 de l'arbre de réducteur 3 (étape d'insertion E3') puis son extrémité arrière 50 est vissée à l'extrémité avant 44 de la bague de liaison 4 (étape de vissage E2') de manière à réaliser un blocage axial de l'arbre de réducteur 3 par rapport à l'arbre de compresseur 1, la saillie radiale extérieure 53 de l'organe de liaison 5 exerçant un effort de plaquage axial dirigé vers l'arrière.

L'organe de blocage 7 est ensuite inséré par la portion avant 33 de l'arbre de réducteur 3 et vient sécuriser le vissage (étape de sécurisation E1'). A la fin de l'étape de sécurisation E1', l'arbre de compresseur 1 et l'arbre de réducteur 3 sont reliés de manière solidaire et la ligne d'entraînement basse pression A est montée.

De même que pour le procédé de démontage, un même outillage ou des outillages différents peuvent être utilisés pour la mise en œuvre des différentes étapes du procédé de montage. En particulier, un outillage peut être maintenu inséré dans la cavité intérieure 32 de l'arbre de réducteur 3 entre deux étapes pour limiter les manipulations.

Un tel procédé de montage permet de remonter de manière simple et pratique l'arbre de turbine 2 à la ligne d'entraînement basse pression A, notamment après une maintenance.

L'invention concerne par ailleurs un procédé de montage de l'arbre de compresseur 1, de manière préliminaire à son intégration dans la ligne d'entraînement basse pression A, qui consiste à insérer dans la cavité intérieure 12 successivement la bague de liaison 4 et l'organe de rétention avant 6, afin de définir une prison 13 dans laquelle est montée prisonnière la bague de liaison 4.

## Revendications

1. Ligne d'entraînement (A) d'un turbomoteur d'aéronef (100) comprenant un arbre principal (1) et un arbre arrière (2) reliés solidairement, la ligne d'entraînement (A) comprenant en outre un arbre avant (3) et un organe de liaison (5) reliant solidairement l'arbre principal (1) et l'arbre avant (3), chacun dudit arbre principal (1), dudit arbre arrière (2) et dudit arbre avant (3) s'étendant longitudinalement d'avant en arrière selon un axe (X) et se présentant sous la forme d'une pièce creuse, ledit arbre principal (1) définissant une cavité intérieure ouverte (12), ledit arbre principal (1) comprenant une portion arrière (10) et une portion avant (14) recevant respectivement une portion avant (20) de l'arbre arrière (2) et une portion arrière (30) de l'arbre avant (3) par emboîtement, ledit arbre principal (1) comprenant :
- au moins un organe de rétention avant (6) et au moins un organe de rétention arrière (11) positionnés dans la cavité intérieure (12) de manière à définir ensemble une prison (13) et comprenant chacun une ouverture centrale (60, 110), la portion avant (20) de l'arbre arrière (2) comprenant une extrémité avant (21) s'étendant dans l'ouverture centrale (110) de l'organe de rétention arrière (11), et
- une bague de liaison (4) située dans la prison (13) et comprenant une extrémité arrière (40) vissée avec l'extrémité avant (21) de l'arbre arrière (2) et s'étendant en butée contre l'organe de rétention arrière (11), l'organe de liaison (5) étant monté dans une cavité intérieure (32) de l'arbre avant (3) et coopérant par vissage avec la bague de liaison (4), ladite bague de liaison (4) comprenant une surface intérieure (42) sur laquelle est formé au moins un organe de préhension (43) accessible depuis une portion avant (14) de l'arbre principal (1) par un outillage s'étendant via l'ouverture centrale (60) de l'organe de rétention avant (6), afin de permettre l'entraînement de la bague de liaison (4) en rotation autour de l'axe longitudinal (X) pour la visser à l'arbre arrière (2), de manière à relier solidairement l'arbre principal (1) à l'arbre arrière (2).

2. Ligne d'entraînement (A) selon la revendication 1, dans lequel la bague de liaison (4) est montée mobile axialement dans la prison (13) entre une position de liaison (P4-1) et une position d'attente (P4-2).

3. Ligne d'entraînement (A) selon l'une des revendications 1 à 2, dans lequel l'organe de rétention arrière (11) est issu de matière de l'arbre principal (1).

4. Ligne d'entraînement (A) selon l'une des revendications 1 à 3, dans lequel l'organe de rétention avant (6) est monté mobile axialement dans la cavité intérieure (12) de l'arbre principal (1) entre une position arrière (P6-1) et une position avant (P6-2).

5. Ligne d'entraînement (A) selon l'une des revendications 1 à 4, dans laquelle l'organe de liaison (5) comprend :
- une extrémité arrière (50) s'étendant dans l'ouverture centrale (60) de l'organe de rétention avant (6) et coopérant par vissage avec une extrémité avant (44) de la bague de liaison (4) et
- un organe de préhension (54) accessible depuis une portion avant (33) de l'arbre avant (3) par un outillage, afin de permettre l'entraînement de l'organe de liaison (5) en rotation autour de l'axe longitudinal (X) pour le visser à la bague de liaison (4) de manière à relier solidairement l'arbre avant (3) à l'arbre principal (1).

6. Ligne d'entraînement (A) selon l'une des revendications 1 à 5, dans laquelle l'organe de liaison (5) comprend une extrémité avant (52) s'étendant en butée contre une extrémité arrière (31) de la portion arrière (30) de l'arbre avant (3).

7. Ligne d'entraînement (A) selon l'une des revendications 1 à 6 se présentant sous la forme d'une ligne d'entraînement basse pression (A) de turbomoteur d'aéronef (100) configurée pour s'étendre de manière coaxiale et radialement intérieure à une ligne d'entraînement haute pression (B) du turbomoteur (100), ledit turbomoteur (100) s'étendant longitudinalement selon l'axe (X) et étant configuré pour permettre la propulsion de l'aéronef à partir de l'accélération d'un flux d'air (F) circulant d'amont en aval dans le turbomoteur (100), l'axe longitudinal (X) étant orienté d'amont en aval, l'arbre principal (1) se présentant sous la forme d'un arbre de compresseur (1) configuré pour être relié à un compresseur basse pression (101) du turbomoteur d'aéronef (100).

8. Procédé de démontage d'une ligne d'entraînement (A) de turbomoteur d'aéronef (100) selon l'une des revendications 1 à 7, comprenant :
- une étape de dévissage (E2) de l'organe de liaison (5) de manière à désolidariser l'organe de liaison (5) et la bague de liaison (4), au moyen d'un outillage inséré par une portion avant de l'arbre avant (3) et coopérant avec un organe de préhension (54) de l'organe de liaison (5) afin d'entraîner l'organe de liaison (5) en rotation autour de l'axe longitudinal (X),
- une étape d'extraction (E3) de l'organe de liaison (5),
- une étape de dévissage (E5) de l'extrémité arrière (40) de la bague de liaison (4) au moyen d'un outillage inséré par la portion avant (14) de l'arbre principal (1), s'étendant via l'ouverture centrale (60) de l'organe de rétention avant (6) et coopérant avec l'organe de préhension (43) de la bague de liaison (4) afin d'entraîner la bague de liaison (4) en rotation autour de l'axe longitudinal (X), de manière à désolidariser la bague de liaison (4) et l'arbre arrière (2), la bague de liaison (4) demeurant prisonnière dans la prison (13), et
- une étape d'extraction (E7) de la portion avant (20) de l'arbre arrière (2) hors de la portion arrière (10) de l'arbre principal (1) de manière à désolidariser l'arbre principal (1) et l'arbre arrière (2).

## Patentansprüche

1. Antriebsstrang (A) eines Flugzeugturbinentriebwerks (100), umfassend eine Hauptwelle (1) und eine hintere Welle (2), die fest verbunden sind, wobei der Antriebsstrang (A) ferner eine vordere Welle (3) und ein Verbindungselement (5) umfasst, das die Hauptwelle (1) und die vordere Welle (3) fest verbindet, wobei sich die Hauptwelle (1), die hintere Welle (2) und die vordere Welle (3) längs von vorne nach hinten gemäß einer Achse (X) erstrecken und als Hohlteil vorliegen, wobei die Hauptwelle (1) einen offenen Innenhohlraum (12) definiert, wobei die Hauptwelle (1) einen hinteren Abschnitt (10) und einen vorderen Abschnitt (14) aufweist, die jeweils einen vorderen Abschnitt (20) der hinteren Welle (2) und einen hinteren Abschnitt (30) der vorderen Welle (3) durch Einstecken aufnehmen, wobei die Hauptwelle (1) umfasst:
- mindestens ein vorderes Halteelement (6) und mindestens ein hinteres Halteelement (11), die in dem Innenhohlraum (12) derart angeordnet sind, dass sie zusammen einen Käfig (13) definieren und jeweils eine zentrale Öffnung (60, 110) umfassen, wobei der vordere Abschnitt (20) der hinteren Welle (2) ein vorderes Ende (21) aufweist, das sich in die zentrale Öffnung (110) des hinteren Halteelements (11) erstreckt, und
- einen Verbindungsring (4), der sich in dem Käfig (13) befindet und ein hinteres Ende (40) umfasst, das mit dem vorderen Ende (21) der hinteren Welle (2) verschraubt ist und sich in Anlage gegen das hintere Halteelement (11) erstreckt, wobei das Verbindungselement (5) in einem Innenhohlraum (32) der vorderen Welle (3) angebracht ist und mit dem Verbindungsring (4) durch Schrauben zusammenwirkt, wobei der Verbindungsring (4) eine Innenfläche (42) aufweist, auf der mindestens ein Greifelement (43) ausgebildet ist, das von einem vorderen Abschnitt (14) der Hauptwelle (1) aus mit einem Werkzeug zugänglich ist, das sich durch die zentrale Öffnung (60) des vorderen Halteelements (6) erstreckt, um den Rotationsantrieb des Verbindungsrings (4) um die Längsachse (X) zu gestatten, um ihn mit der hinteren Welle (2) zu verschrauben, so dass die Hauptwelle (1) fest mit der hinteren Welle (2) verbunden ist.

2. Antriebsstrang (A) nach Anspruch 1, wobei der Verbindungsring (4) im Käfig (13) zwischen einer Verbindungsposition (P4-1) und einer Warteposition (P4-2) axial beweglich gelagert ist.

3. Antriebsstrang (A) nach einem der Ansprüche 1 bis 2, wobei das hintere Halteelement (11) aus dem Material der Hauptwelle (1) besteht.

4. Antriebsstrang (A) nach einem der Ansprüche 1 bis 3, wobei das vordere Halteelement (6) axial beweglich im Innenhohlraum (12) der Hauptwelle (1) zwischen einer hinteren Position (P6-1) und einer vorderen Position (P6-2) gelagert ist.

5. Antriebsstrang (A) nach einem der Ansprüche 1 bis 4, wobei das Verbindungselement (5) umfasst:
- ein hinteres Ende (50), das sich in die zentrale Öffnung (60) des vorderen Halteelements (6) erstreckt und mit einem vorderen Ende (44) des Verbindungsrings (4) durch Schrauben zusammenwirkt, und
- ein Greifelement (54), das von einem vorderen Abschnitt (33) der vorderen Welle (3) mit einem Werkzeug erreichbar ist, um den Rotationsantrieb des Verbindungselements (5) um die Längsachse (X) zu gestatten, um es mit dem Verbindungsring (2) zu verschrauben, so dass die Hauptwelle (1) fest mit der vorderen Welle (3) verbunden ist.

6. Antriebsstrang (A) nach einem der Ansprüche 1 bis 5, wobei das Verbindungselement (5) ein vorderes Ende (52) aufweist, das sich bis zum Anschlag an ein hinteres Ende (31) des hinteren Abschnitts (30) der vorderen Welle (3) erstreckt.

7. Antriebsstrang (A) nach einem der Ansprüche 1 bis 6, der als Niederdruck-Antriebsstrang (A) eines Flugzeugturbinentriebwerks (100) vorliegt, der ausgelegt ist, um sich koaxial und radial innerhalb eines Hochdruck-Antriebsstrangs (B) des Turbinentriebwerks (100) zu erstrecken, wobei sich das Turbinentriebwerk (100) längs gemäß der Achse (X) erstreckt und ausgelegt ist, um den Antrieb des Flugzeugs durch die Beschleunigung eines Luftstroms (F) zu gestatten, der in dem Turbinentriebwerk (100) von stromaufwärts nach stromabwärts strömt, wobei die Längsachse (X) von stromaufwärts nach stromabwärts ausgerichtet ist, wobei die Hauptwelle (1) in Form einer Verdichterwelle (1) vorliegt, die ausgelegt ist, um mit einem Niederdruckverdichter (101) des Flugzeugturbinentriebwerks (100) verbunden zu sein.

8. Demontageverfahren eines Antriebsstrangs (A) eines Flugzeugturbinentriebwerks (100) nach einem der Ansprüche 1 bis 7, umfassend:
- einen Schritt des Abschraubens (E2) des Verbindungselements (5), um das Verbindungselement (5) und den Verbindungsring (4) mittels eines Werkzeugs, das durch einen vorderen Abschnitt der vorderen Welle (3) eingeführt wird und mit einem Greifelement (54) des Verbindungselements (5) zusammenwirkt, um das Verbindungselement (5) um die Längsachse (X) in Drehung zu versetzen, zu trennen,
- einen Schritt des Herausziehens (E3) des Verbindungselements (5),
- einen Schritt zum Abschrauben (E5) des hinteren Endes (40) des Verbindungsrings (4) mittels eines Werkzeugs, das durch den vorderen Abschnitt (14) der Hauptwelle (1) eingeführt wird, sich durch die zentrale Öffnung (60) des vorderen Halteelements (6) erstreckt und mit dem Greifelement (43) des Verbindungsrings (4) zusammenwirkt, um den Verbindungsring (4) um die Längsachse (X) in Drehung zu versetzen, so dass der Verbindungsring (4) und die hintere Welle (2) getrennt werden, wobei der Verbindungsring (4) im Käfig (13) verbleibt, und
- einen Schritt des Herausziehens (E7) des vorderen Abschnitts (20) der hinteren Welle (2) aus dem hinteren Abschnitt (10) der Hauptwelle (1), um die Hauptwelle (1) und die hintere Welle (2) zu trennen.

## Claims

1. Drive line (A) of an aircraft turbine engine (100) comprising a main shaft (1) and a rear shaft (2) integrally connected, the drive line (A) further comprising a front shaft (3) and a connecting member (5) integrally connecting the main shaft (1) and the front shaft (3), each of said main shaft (1), said rear shaft (2) and said front shaft (3) extending longitudinally from front to rear along an axis (X) and having the form of a hollow part, said main shaft (1) defining an open inner cavity (12), said main shaft (1) comprising a rear portion (10) and a front portion (14) respectively receiving a front portion (20) of the rear shaft (2) and a rear portion (30) of the front shaft (3) by interlocking, said main shaft (1) comprising:
- at least one front retaining member (6) and at least one rear retaining member (11) positioned in the inner cavity (12) so as to define together a prison (13) and each comprising a central opening (60, 110), the front portion (20) of the rear shaft (2) comprising a front end (21) extending into the central opening (110) of the rear retaining member (11), and
- a connecting ring (4) located in the prison (13) and comprising a rear end (40) screwed with the front end (21) of the rear shaft (2) and extending in abut against the rear retaining member (11), the connecting member (5) being mounted in an inner cavity (32) of the front shaft (3) to cooperate by screwing with the connecting ring (4), said connecting ring (4) comprising an inner surface (42) on which is formed at least one gripping member (43) accessible from a front portion (14) of the main shaft (1) by a tool extending via the central opening (60) of the front retaining member (6), to allow the connecting ring (4) to be driven in rotation about the longitudinal axis (X) to screw it to the rear shaft (2), so that the main shaft (1) is integrally connected to the rear shaft (2).

2. Drive line (A) according to claim 1, wherein the connecting ring (4) is axially movably mounted in the prison (13) between a connecting position (P4-1) and a stand-by position (P4-2).

3. Drive line (A) according to one of claims 1 to 2, wherein the rear retaining member (11) comes from material of the main shaft (1).

4. Drive line (A) according to one of claims 1 to 3, wherein the front retaining member (6) is axially movable mounted in the inner cavity (12) of the main shaft (1) between a rear position (P6-1) and a front position (P6-2).

5. Drive line (A) according to one of claims 1 to 4, wherein the connecting member (5) comprises:
- a rear end (50) extending into the central opening (60) of the front retaining member (6) and cooperating by screwing with a front end (44) of the connecting ring (4); and
- a gripping member (54) accessible from a front portion (33) of the front shaft (3) by a tool, in order to allow driving the connecting member (5) in rotation about the longitudinal axis (X) to screw it to the connecting ring (4) so that the front shaft (3) is integrally connected to the main shaft (1).

6. Drive line (A) according to any of claims 1 to 5, wherein the connecting member (5) comprises a front end (52) extending abutting against a rear end (31) of the rear portion (30) of the front shaft (3).

7. Drive line (A) according to one of claims 1 to 6 having the form of an aircraft turbine engine (100) low-pressure drive line (A) configured to extend coaxially and radially inward to a high-pressure drive line (B) of the turbine engine (100), said turbine engine (100) extending longitudinally along the axis (X) and being configured to allow propulsion of the aircraft from the acceleration of an air flow (F) circulating from upstream to downstream in the turbine engine (100), the longitudinal axis (X) being oriented from upstream to downstream, the main shaft (1) in the form of a compressor shaft (1) configured to be connected to a low-pressure compressor (101) of the aircraft turbine engine (100).

8. Method for disassembling an aircraft turbine engine (100) drive line (A) according to one of claims 1 to 7, comprising:
- a step of unscrewing (E2) the connecting member (5) so as to detach the connecting member (5) and the connecting ring (4) by means of a tooling inserted by a front portion of the front shaft (3) and cooperating with a gripping member (54) of the connecting member (5) in order to drive the member of connection (5) in rotation around the longitudinal axis (X),
- a step of extracting (E3) the connecting member (5),
- a step of unscrewing (E5) the rear end (40) of the connecting ring (4) by means of a tool inserted by the front portion (14) of the main shaft (1), extending via the central opening (60) of the front retaining member (6) and cooperating with the gripping member (43) of the connecting ring (4) in order to drive the connecting ring (4) in rotation about the longitudinal axis (X), so as to detach the connecting ring (4) and the rear shaft (2), the connecting ring (4) remaining captive in the prison (13), and
- a step of extracting (E7) the front portion (20) of the rear shaft (2) from the rear portion (10) of the main shaft (1) in order to detach the main shaft (1) and the rear shaft (2).
